Europäisches Patentamt

European Patent Office

Office européen des brevets

(19)

(11) **EP 0 776 143 B1**

(12) **FASCICULE DE BREVET EUROPEEN**

(45) Date de publication et mention
de la délivrance du brevet:
**05.02.2003  Bulletin 2003/06**

(51) Int Cl.⁷: **H04Q 11/04**, H04L 12/56

(21) Numéro de dépôt: **96402495.4**

(22) Date de dépôt: **20.11.1996**

(54) **Système de régulation de trains d'information pour commutateur paquet**

System zur Regulierung von Informationsströmen für eine Paketvermittlungsstelle

System for regulating information streams for packet switch

(84) Etats contractants désignés:
**DE GB IT**

(30) Priorité:  **23.11.1995  FR 9513963**

(43) Date de publication de la demande:
**28.05.1997  Bulletin 1997/22**

(73) Titulaire: **FRANCE TELECOM**
**75015 Paris (FR)**

(72) Inventeurs:
• **Simon, Jean-Louis**
**94230 Cachan (FR)**
• **Calvignac, Géraldine**
**94230 Cachan (FR)**
• **Berthou, Martine**
**94230 Cachan (FR)**

(74) Mandataire: **Ballot, Paul**
**Cabinet Ballot**
**122, rue Edouard Vaillant**
**92593 Levallois-Perret Cedex (FR)**

(56) Documents cités:
**US-A- 5 267 235**

• **PROCEEDINGS OF THE INTERNATIONAL SWITCHING SYMPOSIUM, YOKOHAMA, OCT. 25 - 30, 1992, vol. 1 - 2, 25 Octobre 1992, INSTITUTE OF ELECTRONICS;INFORMATION AND COMMUNICATION ENGINEERS, pages 229-233, XP000337649 JONATHAN CHAO H: "A GENERAL ARCHITECTURE FOR LINK-LAYER CONGESTION CONTROL IN ATM NETWORKS"**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention concerne un systéme de régulation de trains d'information pour un commutateur paquet.

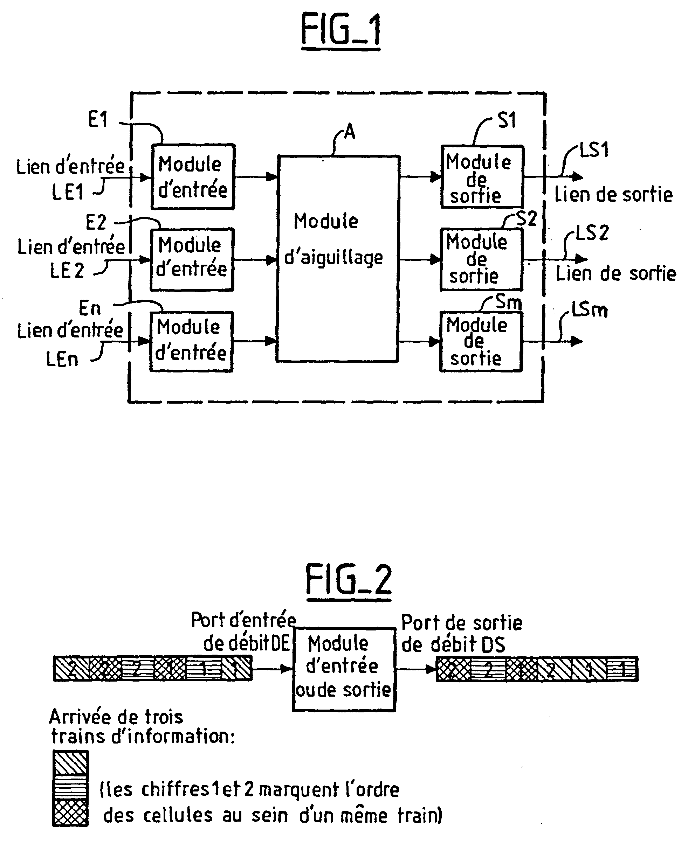

On a représenté sur la figure 1 le schéma de principe d'un dispositif de régulation de trains d'information au sein d'un commutateur. Un tel dispositif comporte principalement des modules d'entrée, des modules de sortie et un module d'aiguillage.

Pour simplifier seuls trois modules d'entrée et trois modules de sortie référencés respectivement E1, E2, E3; S1, S2, S3, ont été représentés sur cette figure.

Généralement ces modules sont réalisés chacun sous forme d'une carte électronique de format standard.

Chaque module d'entrée reçoit sur son port d'entrée un train d'information sporadique ou non à haut débit.

Chaque module, carte d'entrée ou de sortie, dispose de deux ports, un port d'entrée et un port de sortie. Le module d'aiguillage dispose au moins d'autant de ports d'entrée respectivement, de ports de sortie, que de cartes d'entrée respectivement, de cartes de sortie.

Un lien d'entrée du commutateur constitue un port d'entrée d'une carte d'entrée.

Un port est constitué d'un canal qui supporte plusieurs voies formant un entrelacement de trains d'information sachant qu'instantanément il n'y a qu'une cellule sur le canal. Des trains d'information rentrent de façon asynchrone et sortent de façon asynchrone.

Après avoir traversé un module (ou une carte) d'entrée et de sortie, l'ordre des paquets sur chaque train d'information doit rester le même.

On peut se reporter pour mieux comprendre au schéma de la figure 2 qui montre des entrelacements de trains d'information circulant à travers une carte d'entrée ou à travers une carte de sortie.

En effet ce schéma illustre l'arrivée de trois trains d'information sur le port d'entrée de débit DE de la carte et la sortie de ces trois trains d'information sur le port de sortie de débit DS de la carte.

Les chiffres 1 et 2 marquent l'ordre des cellules au sein d'un même train. on peut voir que l'ordre des paquets sur chaque train d'information est le même en sortie qu'en entrée.

A un train d'information est associé un débit (il s'agit du nombre de cellules par seconde ) qui est aussi le débit de la voie sur laquelle il circule.

A un port est associé un débit (valeur limite du nombre de cellules par seconde indépendamment des trains d'information auxquels ces cellules appartiennent). Le débit d'entrée DE d'une carte d'entrée est généralement égal au débit de sortie DS de cette carte, il peut également être inférieur.

On rappelle que l'on entend par voie active pour une carte, une voie pour laquelle il y a des cellules dans cette carte, (cette notion de voie active est donc interne à un commutateur).

Les cellules sont placées sur chaque lien de sortie suivant une règle particulière en distinguant les voies auxquelles elles appartiennent, cette règle particulière pouvant être par exemple :

- soit au prorata des débits de chaque voie,
- soit en partageant de manière équitable le lien entre les voies actives.

D'autre règles peuvent être envisagées.

On rappelle également qu'il est possible qu'une communication (pour des informations autres que les trains de données) entre commutateurs soit réalisée pour ajuster le débit des voies entre commutateurs.

Un commutateur a alors la possibilité d'indiquer à son commutateur amont de réduire les débits des voies provenant des cartes de sortie de ce dernier.

Une carte de sortie du commutateur amont est alors associée à une carte d'entrée du commutateur considéré.

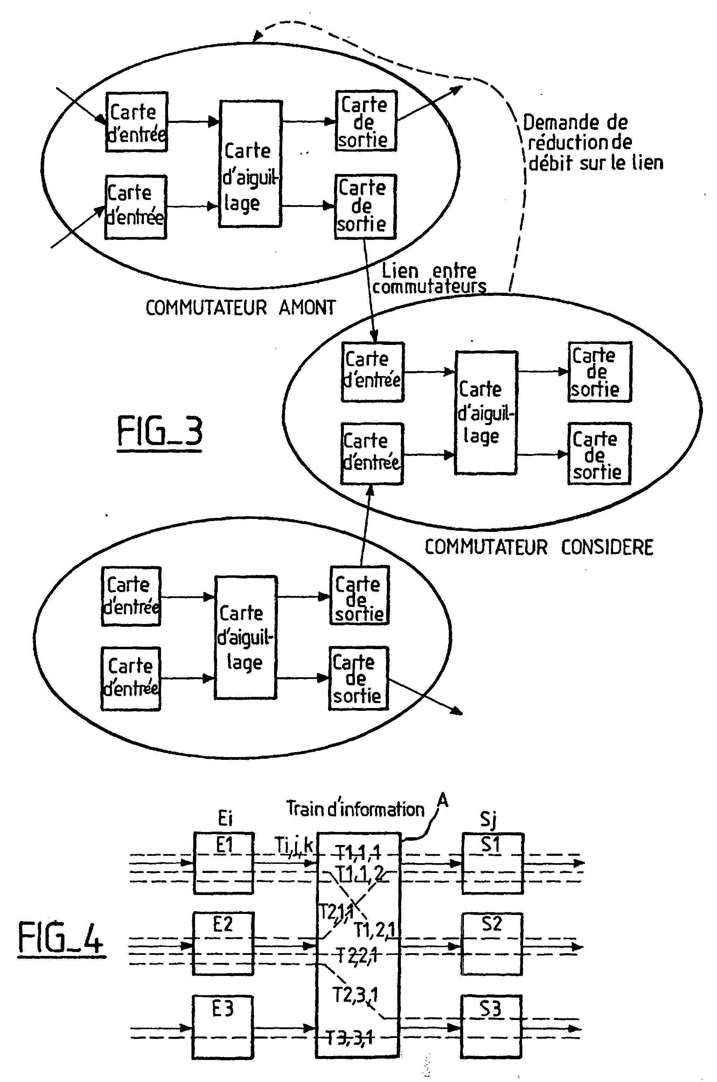

On pourra se reporter au schéma de la figure 3 qui illustre ce cas de figure.

Afin de mieux comprendre le problème posé, on va se placer au sein d'un commutateur et noter Tijk, le train d'information circulant sur la voie Vijk, provenant du module d'entrée i, allant vers le module de sortie J, et d'indice k parmi les trains ayant mêmes modules d'entrée et mêmes modules de sortie.

Le module d'aiguillage est apte à traiter la somme des débits entrant, sa fonction consiste à envoyer un train de données d'un port i à un port i au fil de l'eau. Il est possible que des trains d'information provenant de ports d'entrée différents soient aiguillés sur le même module de sortie.

Les contraintes de temps de traitement et de capacité de stockage des modules d'entrée ou de sortie font que le débit qu'un module peut accepter en entrée (DE) est limité.

On notera DEe le débit d'entrée d'un module d'entrée, DEs celui d'un module de sortie, DEa celui de l'aiguilleur.

On notera DSe le débit de sortie d'un module d'entrée, DSs celui d'un module de sortie, DSa celui de l'aiguilleur.

Dans ce qui suit, on va distinguer le cas où l'aiguilleur n'est pas limité en débit de sortie, du cas où ses ports de sortie et ports d'entrée ont le même débit :

- cas A :

Même si l'aiguilleur supportait la superposition des débits de chacun des trains d'information qui convergent vers le même port de sortie (en ayant le débit de chaque port de sortie égal à la somme des débits de ses ports d'entrée : DSa = Σ DEa), la carte de sortie est limitée par le débit DES qu'elle peut accepter, DEs << Σ DEa ; un goulot d'étranglement apparaît ainsi en entrée de la carte de sortie.

- cas B :

Lorsque la carte d'aiguillage dispose de ports d'entrée et de sortie ayant même débits (DSa = DEa), à chaque port de sortie est associé un tampon de taille fixe dans le but d'accepter l'excès de débit par rapport à DSa, engendré par la simultanéité de convergence de trains sporadiques.

Cependant, le risque subsiste que cette capacité mémoire limitée soit insuffisante pour engranger l'excès de débit par rapport à DSa, d'où le risque de pertes incontrôlables au niveau du tampon.

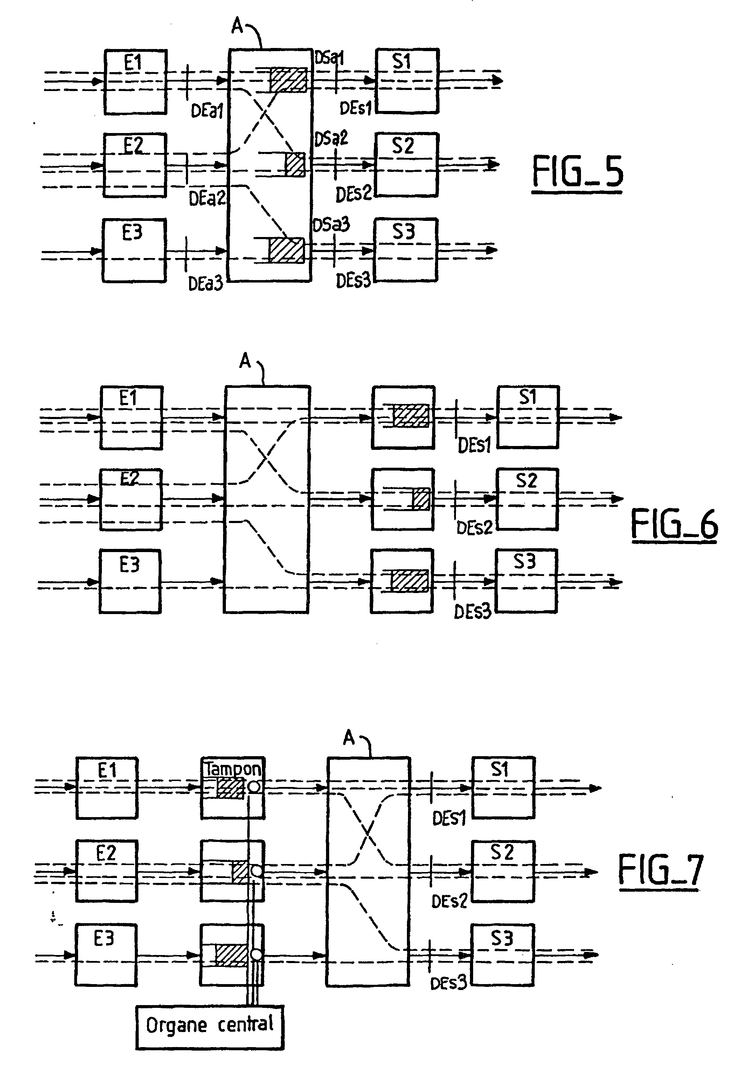

Dans ce cas le problème est déplacé de l'entrée de la carte de sortie (cas A) à la sortie de l'aiguilleur (cas B). Ceci est illustré par le schéma de la figure 5.

Il existe par conséquent un goulot d'étranglement, ce goulot est réalisé par l'aiguilleur.

On va énumérer dans ce qui suit les solutions qui ont été apportées pour résoudre ce problème.

1) La première solution consiste à placer un tampon en sortie de l'aiguilleur. De façon pratique, cela revient à placer une grosse mémoire sur chaque port de sortie. La taille mémoire est fonction du nombre d'entrées et du débit de façon à tamponner l'excès de débit en sortie d'aiguilleur.

Dans le cas A (défini précédemment), les mémoire sont placées entre le port de sortie de l'aiguilleur et la carte de sortie tel que représenté sur la figure 6.

Dans le cas B, ces mémoires sont placées dans la carte d'aiguillage au niveau du port de sortie tel que représenté sur la figure 5.

La taille du tampon nécessaire pour engranger le débit en excès augmente linéairement suivant la relation : (n-1) x D x T, avec n le nombre d'entrées de l'aiguilleur, D le débit des ports d'entrée de l'aiguilleur et du port de sortie (cas B) ou de l'entrée de la carte de sortie (cas A), T la durée pendant laquelle se produit la simultanéité de convergence.

Pour 8 entrées à 155M bits par seconde, et des cellules de 424 bits, (soit 365k cellules par seconde) et des trains d'information de longueur de 200 cellules, (durée d'un train 140μs), une taille de tampon de 1400 cellules est nécessaire pour engranger le débit sur la durée d'un train (140μs), et augmente linéairement tant que cette simultanéité de convergence se poursuit (e.g. sur plusieurs trains).

Ainsi les tailles mémoire nécessaires deviennent rapidement considérables et il n'y a pas d'assurance que la taille mémoire choisie soit suffisante pour engranger l'excès de débit dans tous les cas de figure.

Or, il n'est pas tolérable d'avoir des pertes incontrôlées.

De plus, dans le cas B, lorsque la carte d'aiguillage est prise parmi celles disponibles sur le marché, il n'y a pas de possibilité de toucher à la taille mémoire à l'intérieur de l'aiguilleur, celle-ci étant fixée par le constructeur (par exemple la matrice Fujitsu MB86680A dispose de tampons en sortie ayant une capacité de 75 cellules).

2) La deuxième solution consiste à placer un tampon en entrée d'aiguilleur et à utiliser un mécanisme de réservation de ressources.

Un tampon est placé sur chaque entrée de l'aiguilleur. Les cartes d'entrée font appel à un organe central qui a la connaissance de tous les besoins du commutateur en terme de débit. Cet organe règle les débits de sortie des tampons de telle sorte qu'il n'y ait pas de débordement en sortie de l'aiguilleur. Cette solution est illustrée par la figure 7.

La taille maximale de tampon n'est plus que de : DxT avec D le débit du port d'entrée de la carte d'entrée, T la durée pendant laquelle l'organe central n'autorise plus cette carte à émettre (il s'agit d'un pire cas, l'organe central devant veiller à écouler les tampons au mieux).

Pour mettre en oeuvre cette solution il serait nécessaire cependant de rajouter, au niveau des tampons, des générateurs de rythme pour exécuter les ordres de l'organe central.

Par ailleurs, la centralisation des décisions dans un unique organe est dangereuse (si l'organe central est défectueux, le fonctionnement global du commutateur est affecté).

De plus, en cas de réduction du débit du tampon en raison de voies acheminées vers des cartes de sortie sur lesquelles il y simultanéité de convergence des trains, ce système risque d'affecter à tort des voies supportées par la même carte d'entrée et allant vers des cartes de sortie pour lesquelles il n'y a pas simultanéité de convergence.

Afin de résoudre ce dernier problème, une approche consiste à placer plusieurs tampons sur chaque entrée de l'aiguilleur; autant de tampons sont disposés sur chaque entrée que de directions de sortie possibles.

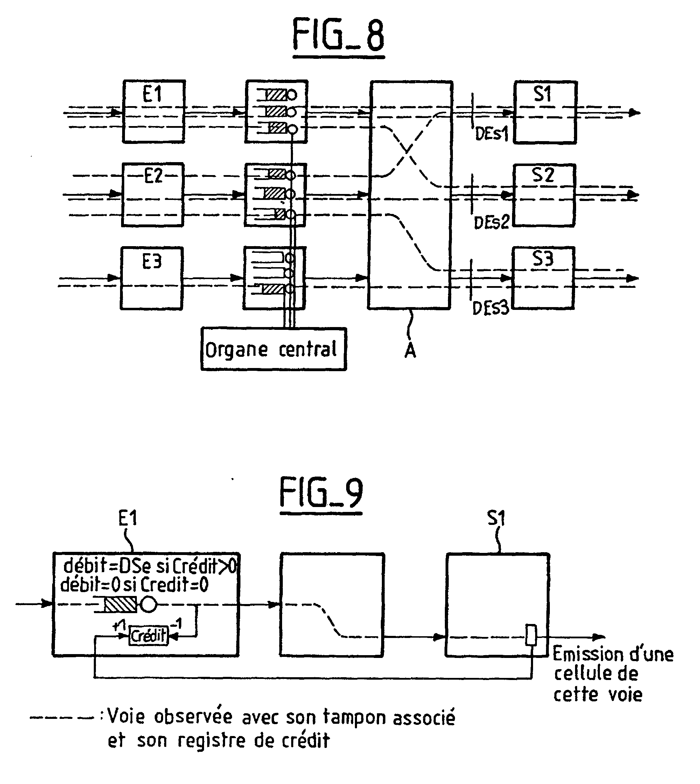

Un organe central règle les débits de sortie des tampons de telle sorte qu'il n'y ait pas de débordement en sortie de l'aiguilleur. Cela est illustré par le schéma de la figure 8.

Cette solution a toujours pour inconvénient le fait qu'il est nécessaire de rajouter des générateurs de rythme pour exécuter les ordres de l'organe central, ainsi que la centralisation des décisions dans un unique organe.

Il s'agit d'une solution complexe à réaliser et à maîtriser.

De plus, l'organe central ne prend pas en compte les voies individuellement, et si l'on souhait placer les cellules sur chaque lien de sortie, suivant une règle particulière en distinguant les voies auxquelles elles appartiennent, il est nécessaire d'avoir un dispositif placé dans chaque carte de sortie arbitrant chacune des voies que la carte supporte. A ce mécanisme d'arbitrage vient alors s'ajouter celui régulant les débits de sortie des tampons en entrée d'aiguilleur.

3) Une troisième et dernière solution consiste à placer un tampon en sortie des cartes d'entrée et à utiliser un mécanisme de crédit.

Des tampons sont placés sur chaque sortie de carte d'entrée ; autant de tampons sont disposés sur chaque sortie que de voies supportées par la carte d'entrée.

La figure 9 illustre le mécanisme de crédit par voie, entre cartes de sortie et cartes d'entrée. Dans cette figure seuls sont représentés le tampon et le registre de crédit associés à une voie particulière dans une carte d'entrée (en fait, il y a autant de tampons et de registres de crédit que de voies supportées par une carte d'entrée).

Selon cette solution une carte d'entrée peut émettre un paquet (ou cellule) appartenant à une connexion lorsque le crédit pour cette voie n'est pas nul.

Après émission d'une cellule par la carte d'entrée la valeur de crédit de la voie, est décrémentée de 1. Après émission d'une cellule pour cette voie, par la carte de sortie, la valeur de crédit de la voie est incrémentée de 1.

Ainsi, chaque saut à travers la matrice pour une voie, est géré par un algorithme de crédit.

Un des intérêts est qu'il n'y a pas de générateurs de rythme supplémentaires dans les cartes d'entrée , ces dernières n'émettent que quand des crédits sont disponibles.

Un autre intérêt est l'indépendance de fonctionnement des différentes cartes ; il n'y a pas de gestion centralisée.

Cette méthode ne résout pas complètement le problème de blocage à la sortie de l'aiguilleur. En effet, dans le cas où beaucoup de crédits sont concentrés dans les cartes d'entrées (cette situation peut se produire au démarrage, mais aussi pendant le fonctionnement normal) et dans les cas ou simultanément plusieurs cartes décident d'utiliser leur crédits pour des voies allant vers une même carte de sortie, il y aura débordement des tampons de la matrice dans le cas B ou saturation de l'entrée de la carte de sortie dans le cas A.

Dans ce cas l'excès de débit qu'il faudra alors engranger dans des tampons en sortie d'aiguilleur (cf. première solution) est de : (n-1) x D avec n le nombre d'entrées qui émettent simultanément D le débit des ports d'entrée de l'aiguilleur et du port de sortie (cas B) ou de l'entrée de la carte de sortie (cas A).

Si T est la durée pendant laquelle se produit la simultanéité de convergence sur la carte de sortie : T = c x V x 1/D, avec c le nombre de crédits, V le nombre de voies supportées par une carte d'entrée et allant sur la même carte de sortie (en se plaçant dans le cas où les crédits au sein d'une même carte d'entrée, pour les voies allant sur une même carte de sortie, sont utilisés successivement).

Alors la taille mémoire nécessaire à engranger l'excès de débit est de :

$$(n-1) \times D \times c \times V \times 1/D = (n-1) \times c \times V,$$

et ce qui représente pour c = 3, n = 8 et V = 300 une taille conséquente de 7200 cellules, (et notamment ce qui est pour le cas B, très supérieur au 75 celles prévues dans un aiguilleur commercialisé).

La taille de 7200 cellules correspond au résultat obtenu à partir de la relation définie dans la première solution pour un temps T nécessaire à écouler 300 trains de 3 cellules (3 étant la valeur de crédit, et non de 200 cellules).

Dans les solutions identifiées de l'art antérieur, on s'aperçoit que les risques de blocage persistent malgré une taille de mémoire considérable placée en sortie de l'aiguilleur (première solution), ou des tampons de plus petites tailles en entrée d'aiguilleur associés à un mécanisme de crédit (troisième solution).

Lorsque le problème du blocage est résolu quel que soit le cas de figure (deuxième solution), se pose alors la question de la maîtrise d'un système fort complexe ainsi que du risque représenté par la centralisation des décisions. De plus, cette dernière solution nécessite un mécanisme d'arbitrage supplémentaire.

On pourra se reporter au document D1 qui constitue l'état de la technique le plus proche.

Dans ce document on gère des connexions entre ports d'entrée et un port de sortie demandé sur requête des ports d'entrée, une connexion étant établie tour à tour et de préférence de façon aléatoire entre un port d'entrée et le port de sortie. De plus, cette gestion est réalisée de manière centralisée par un organe central.

La présente invention a pour objet de résoudre ces inconvénients. Ainsi, par rapport au solutions évoquées dans l'art antérieur selon la présente invention, il n'est pas nécessaire de rajouter des mémoires de taille importante en sortie de l'aiguilleur, il n'y a pas de système centralisé, et un seul organe d'arbitrage est mis en oeuvre dans chaque carte de sortie quelque soit la règle d'arbitrage.

De plus, dans le cas où l'on désire permettre une communication entre commutateurs (pour des informations autres que les trains de données :

- telles que des commandes de régulation de flux), cette solution facilite la correspondance entre les voies supportées par le commutateur et les commutateurs amont d'où elles proviennent. Lors de la gestion des tampons qui leur sont associés dans le commutateur, une commutation inverse n'est pas nécessaire, comme explicité dans ce qui suit.

La présente invention a plus particulièrement pour objet un système de régulation de trains d'information pour commutateur paquet selon lequel on prévoit une file d'attente par voie de chaque module d'entrée susceptible d'être piloté par un arbitre placé dans chacun des modules de sortie supportant ces voies.

L'invention a donc pour objet un système de régulation de trains d'information selon la revendication 1.

Selon une autre caractéristique, le système comporte un bus de communications (BD) pour les échanges de signaux (P/A, DE) entre module d'entrée et de sortie du système, ce bus interconnecte directement tous les modules d'entrée à tous les modules de sortie.

L'organe d'accès et de gestion des files d'attente et l'organe d'extraction des paquets sont réalisés par un processeur paquet associé à une mémoire de contexte des voies qui fait correspondre à chaque paquet son numéro de voie, et par un organe de traitement de demandes d'émission (DE) reçues et de génération de présence ou d'absence de paquets (P/A).

L'organe de traitement des demandes d'émission (DE) et de génération de présence ou d'absence de paquets (P/A) comporte un dispositif de réception et de traitement pour recevoir plusieurs demandes d'émission (DE) par ordre d'arrivée provenant de modules de sortie différents et traite une seule demande (DE) au rythme de sortie (Te) du module d'entrée, parmi celles reçues afin d'émettre sur le port de sortie un paquet appartenant à la voie associée à la demande d'émission traitée.

L'organe d'accès aux files d'attente et d'extraction des paquets comporte en outre un organe de communication avec le bus de dialogue (BD) pour mémoriser les demandes d'émission (DE) qui lui sont adressées et mettre en attente les indications de présence ou d'absence de paquet (P/A) tant que le bus n'est pas disponible.

L'organe de communication comporte un processeur de gestion du bus de dialogue (BD), deux piles (702) dont l'une reçoit les demandes d'émission (DE) des différents modules de sortie et l'autre les indications de présence ou d'absence de paquet relatives à chaque voies supportée par le module d'entrée et un circuit de contrôle pour comparer l'information reçue d'identification du module destinataire à sa propre identification et savoir ainsi si le bus de dialogue est disponible pour ce module d'entrée.

Le système de régulation comporte en outre un arbitre du bus de dialogue (BD) chargé de fournir les signaux de séquencement pour les lectures et écritures sur ce bus de dialogue.

Chaque module de sortie (Si) comporte un processeur de paquets associé à une mémoire de contexte des voies , l'arbitre permettant de générer les demandes d'émission et de traiter les indications de présence ou d'absence de paquets reçues selon la règle d'arbitrage pré-établie.

Chaque module de sortie comporte un organe de communication pour le dialogue avec le bus de dialogue (BD) pour mémoriser les indications de présence ou d'absence de paquet (P/A) qui lui sont adressées par les différents modules d'entrée et mettre en attente les demandes d'émission de paquets (DE) à destination de différents modules d'entrée tant que le bus n'est pas disponible.

L'organe de communication comporte deux piles dont l'une sert à stocker les indictions de présence ou d'absence de paquets et l'autre les demandes d'émission et un circuit de contrôle recevant une information d'identification du module et comparant cette information à sa propre identification et savoir ainsi si le bus de dialogue est disponible pour ce module de sortie.

D'autre particularités et avantages de la présente invention apparaîtront à la lecture de la description qui est donnée à titre d'exemple illustratif et non limitatif et en regard des dessins sur lesquels :

- Les figures 1 à 9, représentent les schémas des systèmes de régulation selon l'art antérieur,
- La figure 10, représente le schéma d'un système de régulation selon l'invention,
- La figure 11, représente le schéma général d'un système de régulation selon l'état delà technique,
- La figure 12, représente le schéma général d'un système de régulation selon l'invention,
- La figure 13, représente le schéma fonctionnel d'un module d'entrée,
- La figure 14, représente le schéma fonctionnel d'un module de sortie,

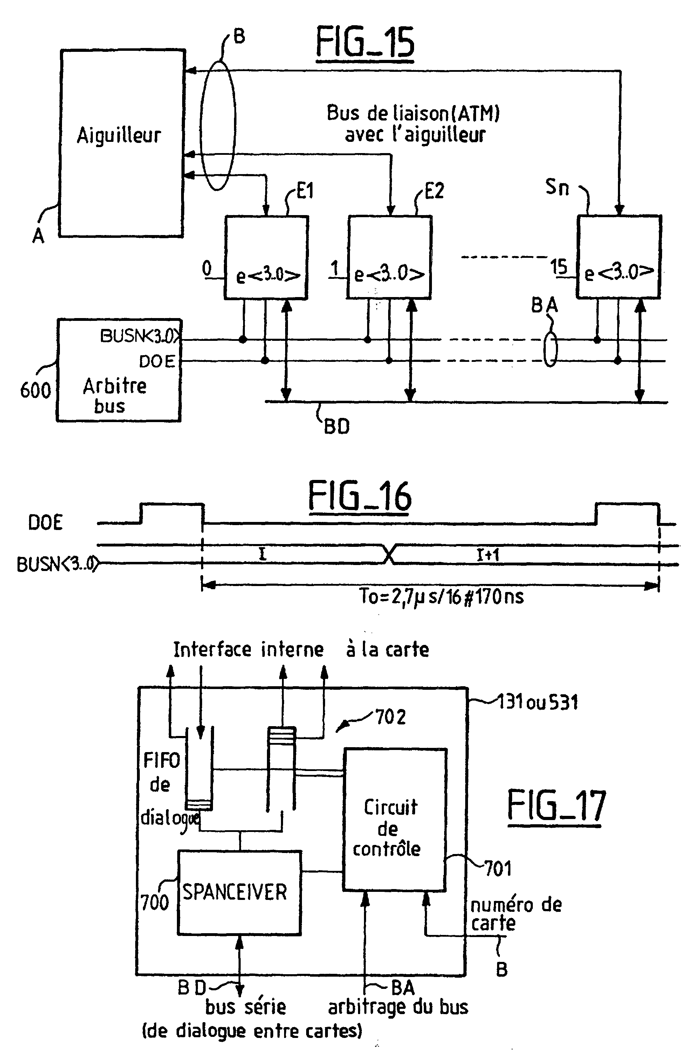

- La figure 15 représente le schéma les liaisons entre modules et aiguilleur,
- La figure 16 représente le chronogramme des signaux DOE et BUSN <3...0>,
- La figure 17 représente le schéma de l'organe de commutation,
- La figure 18 représente le schéma de réalisation d'une carte ou module d'entrée,
- La figure 19 représente le schéma de réalisation d'une carte ou module de sortie,
- La figure 20 représente le schéma fonctionnel de la gestion des demandes d'émission (DE).

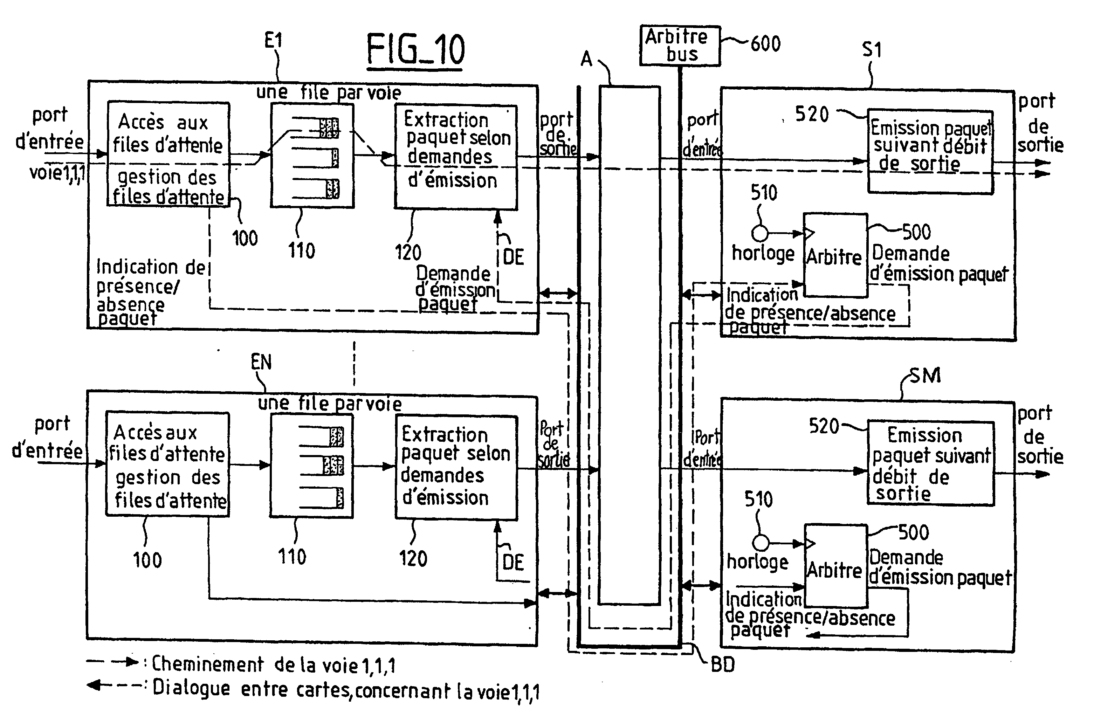

On va maintenant décrire le fonctionnement global du commutateur à l'aide de la figure 10 qui représente les différents blocs fonctionnels assurés par chacun des organes constitutifs du commutateur.

Chaque module d'entrée E1-EN possède un ensemble d'accès aux files d'attente et de gestion des files d'attente 100, un ensemble de files d'attentes 110 et un ensemble d'extraction des paquets selon les demandes d'émission DE.

Chaque module de sortie S1-SM comporte un arbitre 500 piloté par une horloge 510 et un ensemble d'émission de paquets 520 suivant le débit de sortie.

Dans l'illustration qui est donnée par cette figure, l'aiguilleur A fait passer le train d'information circulant sur la voie 1,1,1 reçu sur le port d'entrée du module E1 par le module de sortie S1.

Conformément à l'invention on a placé dans chaque module d'entrée autant de tampons que de voies supportées par ces modules.

Lorsqu'un paquet arrive sur le lien d'entrée, il est placé dans la file d'attente associée à la voie à laquelle il appartient et ceci grâce à l'identificateur de voie contenu dans le paquet.

Si la file d'attente passe de l'état vide à l'état non vide, une indication de présence paquet pour cette voie est envoyée sur un bus BD de dialogue entre modules d'entrée et modules de sortie, vers le module de sortie qui supporte aussi cette voie.

A cette fin une table de contexte propre à chaque module et adressée par l'identificateur de voie permet de trouver le numéro du module de sortie. Si la file d'une voie n'est pas vide lors de l'arrivée d'un paquet, il n'est pas utile de générer une indication de présence paquet.

Au sein du module de sortie, l'arrivée de l'indication de présence paquet, par le bus de dialogue BD, autorise la génération de requêtes d'émission DE pour cette voie.

L'arbitre 500 gère l'ensemble des requêtes d'émission pour les voies que la carte de sortie supporte. L'arbitre 500 sélectionne une requête par temps Ts (Ts, période de travail de l'arbitre : DSs = 1/Ts), ce qui donne lieu à une demande d'émission DE pour la voie correspondante, envoyée vers la carte d'entrée qui la supporte, via le bus de dialogue.

Le module d'entrée traite les demandes d'émission par ordre d'arrivé, au rythme Te (Te, période de travail du module d'entrée : DSe = 1/Te) : le module d'entrée sélectionne une demande d'émission, émet un paquet de la voie associée sur son port de sortie puis détruit la demande d'émission. Lorsqu'une file d'attente dans le module d'entrée devient vide (après émission du dernier paquet qu'elle contenait), une indication d'absence paquet pour cette voie est envoyée, sur le bus de dialogue BD entre modules d'entrée et modules de sortie, vers le module de sortie qui supporte aussi cette voie.

Au sein du module de sortie, l'arrivée de l'indication d'absence paquet provoque la suppression des requêtes d'émission pour la voie (tant qu'il n'y a pas de réception d'indication de présence paquet pour cette voie). Ainsi l'arbitre dans le module de sortie ne sélectionne plus cette voie.

Le dialogue entre module d'entrée et module de sortie, pour ce qui est des informations autres que les trains de données, ne passe donc pas par l'aiguilleur, mais se fait par un bus dédié à ce dialogue que l'on a référencé BD.

Ainsi sur ce bus circulent les indications de présence ou de non présence paquet, allant des modules d'entrée vers les modules de sortie, et les demandes d'émission, allant des modules de sortie vers les modules d'entrée. Avec chaque indication de présence ou de non présence paquet, ou demande d'émission, est fournie l'identification de la voie à laquelle elle correspond et l'identification de la carte destinataire de l'information.

L'arbitre 500 situé dans le module de sortie assure la régulation des trains d'information appartenant aux différentes voies que le module de sortie supporte.

Cet arbitre fonctionne au rythme du débit de sortie du module de sortie.

A chaque temps Ts (DSs = 1/Ts), l'arbitre 500 choisit une voie pour qu'elle émette un paquet à partir du module d'entrée. Pour cela, l'arbitre génère une demande d'émission DE pour cette voie, et la communique par le bus de dialogue au module de sortie qui supporte la voie.

L'arbitre 500 a connaissance de l'état des files d'attente dans les modules d'entrée (i.e. présence ou non de paquets dans la file). En effet, une indication de présence paquet ou de non présence paquet P/A est envoyée par un module d'entrée à chaque changement d'état d'une file, vers le module de sortie qui supporte la voie associée (et ceci pour chacune des files que support le module d'entrée).

On va voir maintenant de quelle façon est réalisée la gestion des demandes d'émission DE par le module d'entrée (bloc fonctionnel 120).

Le module d'entrée reçoit des demandes d'émission DE provenant de modules de sortie différents, par le bus de dialogue BD. Le module d'entrée gère les demandes d'émission DE au rythme du débit de sortie du module d'entrée.

A chaque temps Te (DSe = 1/Te), le module traite une seule demande d'émission parmi celles reçues des modules de sortie, et émet sur son port de sortie un paquet appartenant à la voie associée à la demande d'émission traitée.

Si plusieurs demandes d'émission provenant de modules de sortie différents sont reçues pendant une même période Te par le module d'entrée, elles sont placées dans une file en attente de traitement lors d'une période Te.

Si pour des raisons de délai inhérent au fonctionnement interne du commutateur, une demande d'émission DE arrive sur un module d'entrée alors que ce module vient d'envoyer une indication de non présence paquet pour la voie associée (i.e. son tampon vient de se vider) alors la demande d'émission est détruite dès sa réception dans la carte d'entrée.

Outre l'ensemble des fonctions qui viennent d'être décrites, le commutateur comporte également des fonctions supplémentaires telle que la communication entre commutateurs.

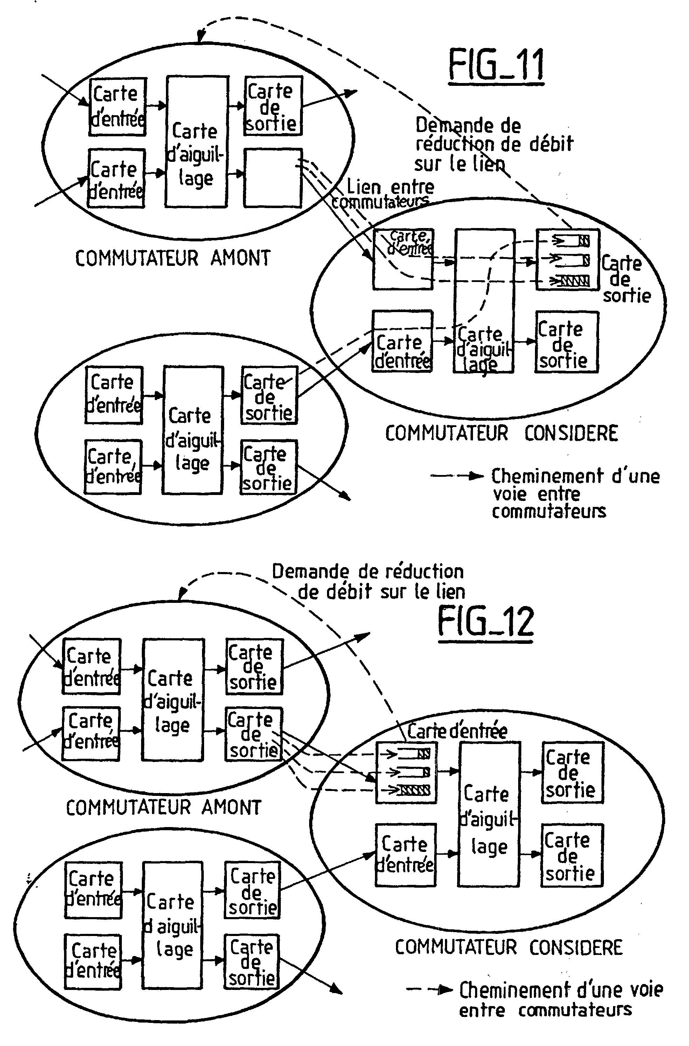

A un module d'entrée du commutateur est associé un module de sortie du commutateur amont, comme illustré par la figure 11. Le commutateur observe ses files d'attente de paquets, et en fonction de leur niveau d'occupation, demande au commutateur amont de réduire ou d'augmenter leur débit.

Pour mieux comprendre l'apport de l'invention par rapport à l'état de la technique, on va considérer les deux configurations illustrées par les figures 11 et 12, suivant que les files d'attentes de paquets sont placées dans les modules d'entrée (invention) ou de sortie (état de la technique).

Dans la première configuration, un module de sortie supporte des files dont les voies proviennent de différents commutateurs. Il est donc nécessaire d'opérer une commutation inverse afin de déterminer le commutateur amont qui supporte les files.

Dans la deuxième configuration, qui est celle de l'invention proposée, toutes les files supportées par un même module d'entrée proviennent du même commutateur amont.

Il n'est donc pas nécessaire ici, d'effectuer une commutation inverse. L'information de demande de réduction/ augmentation de débit est envoyée directement au commutateur associé au module d'entrée, puis le commutateur amont aiguille cette information vers le module de sortie concerné; l'arbitre en tient compte pour la génération de requêtes.

Le commutateur est apte également à mettre en oeuvre une règle pré-établie d'émission sur le lien de sortie.

Dans la description du principe de l'invention, il n'a pas été précisé quel est le mode de fonctionnement de l'arbitre, ni celui de la génération de requête, afin de montrer qu'il est aisé de mettre en oeuvre différentes règles d'émission en jouant simplement sur le mode de génération de requêtes et sur le mode de sélection des requêtes.

On a jusque là simplement précisé que la génération de requêtes est fondée sur les informations de présence/ absence paquet, et que l'arbitre sélectionne une requête par temps Ts, ce qui donne lieu à une demande d'émission DE.

On va donner dans ce qui suit des exemples de règles particulières d'émission sur le lien de sortie :

a) - la règle peut être le partage du lien de manière équitable :

- arbitre tournant sur les requêtes de chacune des voies,
- génération de requête sur indication de présence paquet,

b) - la règle peut être le partage du lien au pro rata des débits de chaque voie :

- arbitre tournant sur les requêtes de chacune des voies,
- génération de requête : fonction ET logique entre le coup d'horloge (correspondant au débit de la voie) et l'indication de présence paquet,

c) - la règle peut être la combinaison de règles d'émission :

utilisation de deux arbitres : l'un prioritaire par rapport à l'autre,

Premier arbitre : il garantit un débit minimum pour chaque voie Dmg,

- arbitre tournant sur les requêtes Dmg de chacune des voies,
- génération de requête Dmg : fonction ET logique entre le coup d'horloge Dmg(i) (pour la voie n° i) et l'indication de présence paquet pour la voie,

Deuxième arbitre : il permet la ré-allocation du débit non utilisé (en sus de la somme des Dmg de chaque voie supportée par le lien),

- arbitre tournant sur les requêtes Dc de chacune des voies,
- génération de requête DC (de ré-allocation) sur l'indication de présence paquet.

A chaque temps Ts, si le premier arbitre n'a pas de requête à sélectionner, alors le deuxième arbitre sélectionne une requête Dc.

La sélection d'une requête donne lieu directement à une demande d'émission pour la voie associée à la requête : s'il s'agit d'une requête Dmg (respectivement requête Dc), une DE Dmg (respectivement DE Dc) est générée.

Au niveau d'un module d'entrée, les DE Dmg seront traitées de façon prioritaires aux DE Dc quelles que soient les voies qui leur sont associées.

En cas de réception d'une notification de congestion pour une voie i, il n'y a pas de génération de requête Dc pour la voie i tant que la situation de congestion se produit, (la voie i ne peut être sélectionnée que par le premier arbitre). Ainsi la voie i est limitée au débit Dmg, et ne participe pas à la ré-allocation.

C'est cet exemple de règle d'émission que l'on va utiliser dans la description de la gestion des demandes d'émission faite dans la suite.

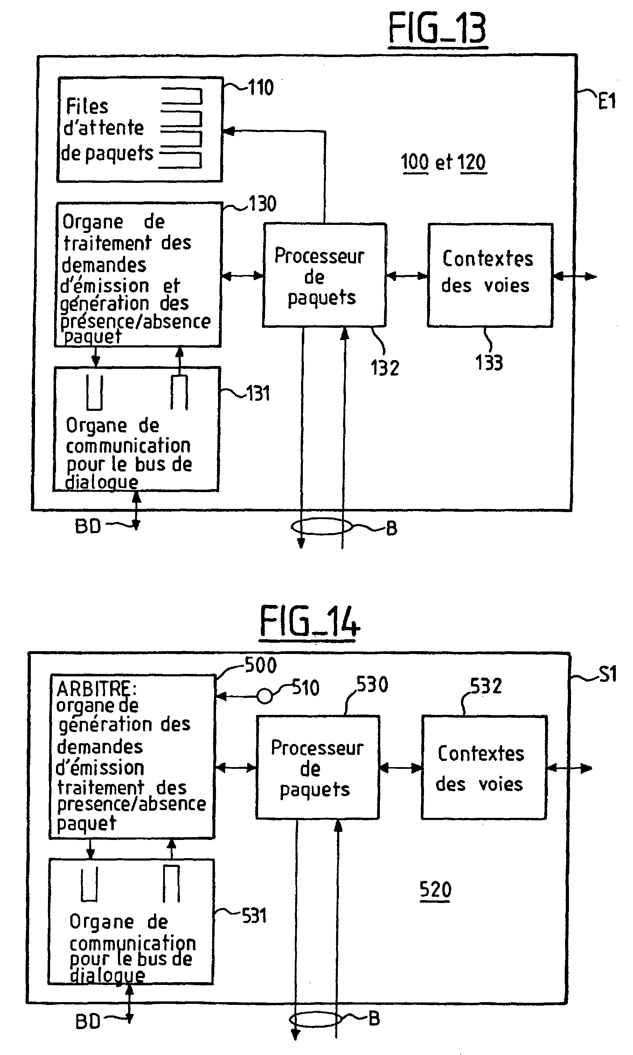

On va maintenant décrire dans ce qui suit la structure fonctionnelle des modules d'entrée et de sortie en référence aux figures 13 et 14.

Les modules d'entrée (E1, EN), figure 13, comportent outre une file d'attente par voie 110 comme cela a été dit, deux ensembles fonctionnels:

- un ensemble d'accès aux files d'attentes et de gestion des files d'attente 100, et,
- un ensemble d'extraction paquet 120 répondant aux demandes d'émission DE.

Ces ensembles fonctionnels sont réalisés tous deux par un processeur de paquets 132 associé à une mémoire de contexte des voies 133, et à un organe de traitement des demandes d'émission, reçues à travers un organe de communication avec le bus de dialogue, et de génération des présences ou absences de paquet 130.

Le processeur 132 est relié à l'aiguilleur par le bus B servant au transport des paquets de chaque voies qui attendent dans les files d'attente.

Les modules de sortie (S1, SN), figure 14, comportent un arbitre 500 piloté par une horloge interne 510 et un ensemble fonctionnel pour l'émission de paquets (suivant le débit de sortie du module) s'articulant autour d'un processeur de paquets 530. Le processeur de paquet est associé à une mémoire de contexte des voies 532.

Un organe 531 de communication avec le bus de dialogue permet de recevoir les indications de présence ou d'absence de paquets et d'envoyer les demandes d'émission DE.

Le processeur 530 reçoit les paquets de l'aiguilleur A à l'aide du bus B.

On va maintenant décrire dans ce qui suit une implémentation particulière donnée à titre d'exemple illustratif et non limitatif.

La description qui suit correspond donc à un mode de réalisation particulier choisi par le déposant et qui correspond aux choix suivants :

- une matrice 16x16 donc au plus 16 cartes électroniques,
- un débit maximum de 155Mbit/s,
- les paquets sont des cellules ATM de 53 octets et 424 bits,
- la période de base To du commutateur est de 2,74 μs ce qui correspond à un débit de 155Mbit/s avec des paquets ATM de 424 bits. Cette période To est la période de plus grand débit possible rencontré sur les interfaces entre cartes et aiguilleurs du commutateur.

Le bus "supplémentaire" c'est-à-dire le bus de dialogue BD est un bus bi-directionnel, point à multipoint, partagé par toutes les cartes.

La gestion du bus est réalisée grâce à un composant MOTOROLA : commercialisé sous le nom de SPANCEIVER.

Les messages se trouvant dans chaque organe de communication 131 ou 531, émis par ce composant, sont constitués de trois champs :

- un champ codant le numéro de la carte destinataire (4 bits).
- un champ codant le numéro de la voie (12 bits).
- un champ codant le type d'information (2 bits) pour différentier : les présences paquet, les absences paquet, les demandes d'émission Dmg, les demandes d'émission de réallocation Dc. Ces messages transitent dans cet organe au moyen de l'une des piles 702 selon la direction du message (message reçu ou message émis). Le circuit 701 compare le signal BUSN <3...0> au numéro de carte pour commander la lecture d'un message dans l'une ou l'autre pile ou ne pas la commander.

Durant une période de base du commutateur To, toutes les cartes disposent d'un intervalle de temps où elles peuvent émettre deux messages, (ce qui est suffisant car une carte d'entrée a au plus à envoyer, par durée To, une indication d'absence paquet pour une voie et une indication de présence paquet pour une autre voie ; une carte de sortie à une seule demande d'émission à envoyer par To).

Les 16 emplacements susceptibles de dialoguer sur ce bus sont numérotés de 0 à 15. Les cartes lisent leur emplacement sur les broches du connecteur du bus ATM signaux e<3..0>. Toutes les cartes reçoivent les signaux BUSN<3..0> et DOE.

L'arbitre 600 est un générateur de signaux et génère les signaux de séquencement des lectures et écritures BUSN <3..0> et DOE représentés sur le chronogramme de la figure 16 que chaque carte (ou module) reçoit.

Les règles d'arbitrage sur le bus de dialogue entre cartes sont les suivantes :

- Une carte maîtresse génère (l'arbitre 600) les signaux BUSN <3..0> et DOE conformes aux chronogrammes figure 16.
- Le front descendant de DOE marque le début d'un arbitrage et la comparaison de BUSN <3..0> avec le numéro de la carte e<3..0>.
- Une carte est admise à écrire si BUSN <3..0>=e<3..0>.
- Une carte pour laquelle le bus n'est pas disponible en écriture est en état de lecture du bus.
- Quand une carte est maîtresse sur le bus, elle n'a le droit d'émettre que 2 messages.

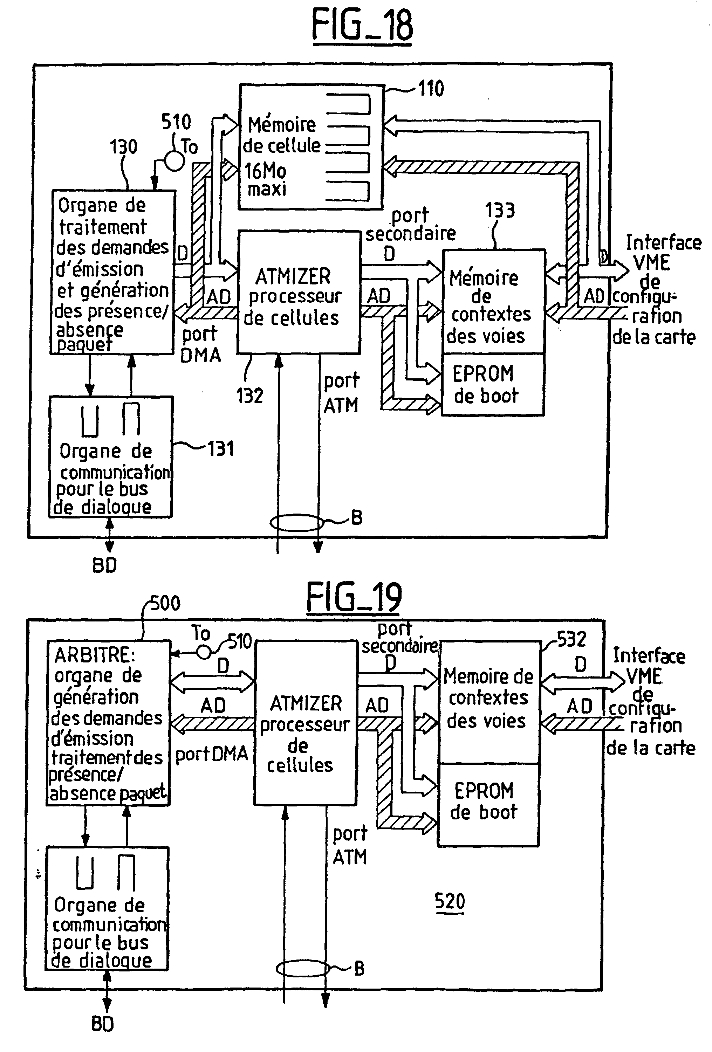

A titre tout a fait d'exemple on a représenté sur les figures 18 et 19 la réalisation particulière qui a été faite pour les cartes d'entrée et les cartes de sorties dans le cas de traitement de paquets constitués par des cellules ATM.

Les processeurs paquets 132 ou 530 sont des processeurs de cellules ATM commercialisés sous le nom de ATMIZER. Les éléments de mémorisation des contextes de voie sont des mémoires non volatiles. Des mémoires contiennent le programme BOOT de démarrage de l'application. Le processeur est relié à cette mémoire 133 (ou 532) par un bus d'adresse et de données par son port secondaire. Le processeur est relié à l'organe de traitement des demandes DE130 ou de génération des demandes DE500 (arbitre) par son port DMA.

Chaque carte d'entrée ou de sortie peut être configurée au moyen d'une interface VME (non représentée) à partir d'un bus d'adresse AD et de données D.

Dans le cas des cartes d'entrée, l'interface VME accède à la mémoire de contexte 133 et à la mémoire de cellule 110 par ces bus D et AD.

Dans le cas des cartes de sortie, l'interface VME accède à la mémoire de contexte 532 par ces bus D et AD.

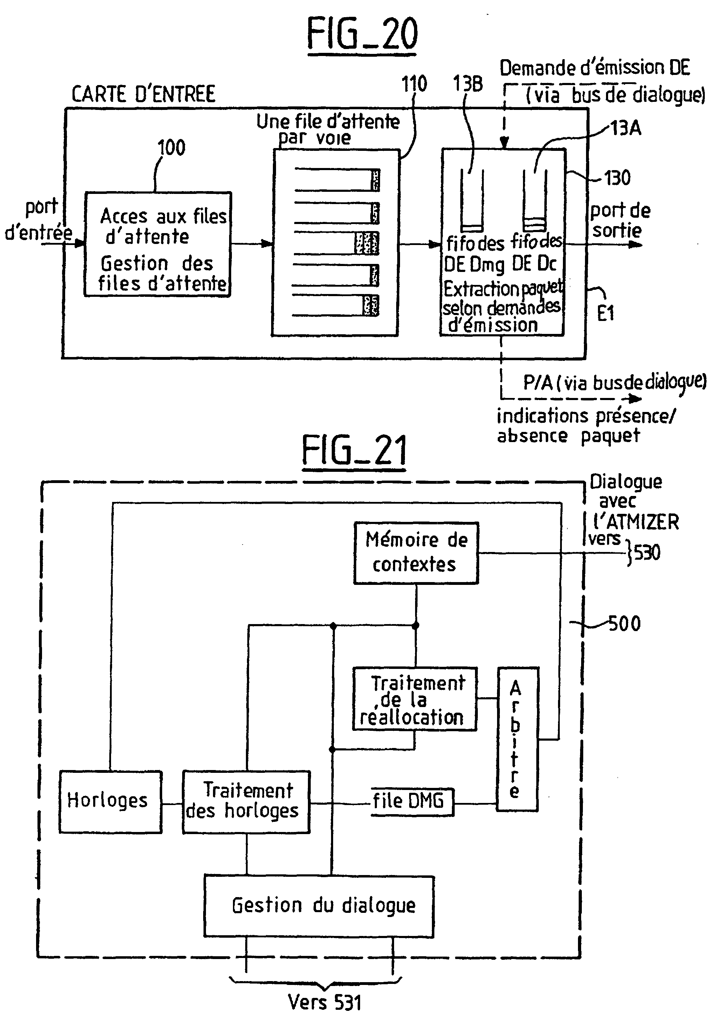

La figure 20 illustre selon ces réalisations la gestion des demandes d'émission DE. Il s'agit de l'organe 130 de traitement des demandes d'émission, et de génération d'indication de présence/absence paquet. Le but du mécanisme de gestion des DE est de palier la simultanéité d'arrivée sur une même carte d'entrée de plusieurs DE pour des cartes de sortie différentes.

En effet, pendant une même période de base système To, plusieurs cartes de sortie peuvent envoyer chacune une DE à une même carte d'entrée. Or, une seule DE peut être utilisée par une carte d'entrée par période de base du système. D'autre part, les délais de transmission des indications d'absence/présence paquet, des DE, et le temps de prise en compte de ces informations par l'arbitre dans une carte de sortie, font qu'il est nécessaire de faire en sorte qu'il n'y ait pas plus de DE pour une voie que de paquets en attente dans sa file.

Deux files sont utilisées pour cela par carte d'entrée : une pile fifo 13A pour les demandes d'émission de réallocation DE Dc et une pile fifo 13B pour les demandes d'émission DE Dmg au coup d'horloge Dmg.

La fifo des demandes DE au coup d'horloge Dmg (et respectivement la file des DE Dc) est commune à toutes les voies supportées par la carte d'entrée.

Le processeur dispose de plusieurs compteurs associés à une voie (et donc à une file d'attente de paquet n°i) :

CCI(i) : Compteur de Cellules (représente le nombre de cellules réellement contenues dans la file d'attente associée à la voie) est utilisé pour le protocole de notification et la gestion de la mémoire.

CPC(i) : Compteur Potentiel de Cellules (représente le nombre de cellules réellement contenues dans la file d'attente associée à la voie moins le nombre total DE Dmg + DE Dc pour cette voie).

CDC(i) : Compteur de demandes d'émission à Dc pour la voie.

Le mécanisme suivant est mis en oeuvre pour qu'il n'y ait pas de DE inutiles pour la voie i. On compte les cellules de la file d'attente CPC, et on détruit une DE Dc sitôt que le total DE Dmg + DE Dc pour la voie a atteint le nombre de cellules dans la file associée à la voie. Tant qu'il y a autant de DE (DE Dmg et DE Dc indifféremment) pour une voie que de cellules dans sa file d'attente de paquet, toute nouvelle DE Dc reçue est détruite. S'il s'agit d'une DE Dmg le principe consiste à remplacer une DE Dc (déjà reçue et non encore utilisée) pour la voie par la DE Dmg qui vient d'être reçue.

Les DE Dmg sont prioritaires par rapport aux DE Dc.

On va maintenant décrire de façon plus détaillée la réalisation de l'arbitre 500 à partir du schéma fonctionnel représenté à la figure 21.

En pratique, un premier arbitre s'occupe des demandes DE Dmg et comporte une fifo des DE Dmg 501. Un deuxième arbitre 502, en charge de la réallocation, met en oeuvre une ronde des requêtes Dc. Il est formé d'un tableau d'un nombre prédéfini de cases. Une case est marquée avec un numéro de voie. Lorsqu'une case est sélectionnée, si elle est marquée elle donne lieu à une DE Dc pour cette voie.

Pour chaque voie les informations suivantes sont contenues dans une mémoire de contexte de voies 503 :

- pour la voie n°i :

Pcell(i) : indique la présence de cellule (présence paquet dans la carte d'entrée,

HDmg(i) : indique qu'un coup d'horloge à Dmg a eu lieu alors que le Pcell était à 0,

Case_Marquée(i) : indique qu'il existe au moins une case marquée dans la ronde de réallocation,

Réallocation(i) : indique que la réallocation est autorisée

e(i) : déplacement du pointeur dans la ronde de réallocation,

- variables globales :

I_Ronde : indice courant de lecture dans la ronde de réallocation,

I_Trouvée : un indice de calcul pour la ronde de réallocation.

Ces differentes fonctions définissent les régles d'arbitrages implémentées dans chaque circuit d'arbitrage 500 et sont mises en oeuvre par les algorithmes reproduits dans les pages d'annexes suivantes :

ANNEXE 1 (page 29)
ANNEXE 2 (page 30)

EP 0 776 143 B1

## ANNEXE 1

### Algorithme de traitement des horloges Dmg

```
si coup d'horloge à Dmg
        faire sur toutes les voies ayant ce Dmg
                si Pcell(i)
                        enfiler une DE Dmg(i) dans fifo Dmg
                sinon
                        HDmg(i) = 1
                fin si
        fin faire
fin si
```

### Algorithme de traitement à la réception d'une indication ABSENCE PAQUET

```
Pcell(i) = 0
```

### Algorithme de traitement à a réception d'une indication de PRESENCE PAQUET

```
Pcell(i) actif
si HDmg(i)
        enfiler une DE Dmg(i) dans FIFO Dmg
        HDmg(i) inactif
sinon
        si Case_Marquée(i) inactif et Réallocation actif
                recherche d'une case libre après I_Ronde+e(i) (soit I_Trouvée)
                Marquage de la case I_Trouvée
                Case-Marquée(i) actif
        fin si
fin si
```

11

## ANNEXE 2
### Algorithme de traitement à l'émission d'une DE

Tous les Ts
si FIFO Dmg non vide
    tirer une DE Dmg de la FIFO Dmg et l'émettre
sinon
    faire tant qu'on a le temps et que l'on a pas trouvé de case marquée avec un
    Pcell actif et Réallocation actif :
        trouver la case marquée suivante après I_Ronde soit I_Trouvée
        si case marquée
            démarquer la case I_Trouvée
            I_Ronde=I_Trouvée (actualisation de I_Ronde)
            si Pcell(I_Trouvée) actif et Réallocation(I_Trouvée) actif
                émettre une DE Dc(I_Trouvée)
                recherche d'une case libre après I_Ronde+e(i) (soit I_Trouvée)
                marquer la case I_Trouvée
                arrêter de faire
            sinon
                Case_Marquée(i)=0
            fin si
        fin si
    fin faire
fin si


### Algorithme de traitement à la réception des notifications de congestion

si changement de mode (congestion/décongestion) sur la voie i
    si passage en mode congestion
        Réallocation(i) inactif
        si Cas_Marquée(i) actif
            trouver la case marquée et la démarquer
            Case_Marquée(i) inactif
        fin si
    sinon      (passage en décongestion)
        Réallocation(i) actif
        si Case_Marquée(i) inactif
            recherche d'une case libre après I_Ronde+e(i) (soit I_Trouvée)
            marquer la case I_Trouvée avec le n°i
            Case_Marquée(i) actif
        fin si
    fin si
fin si

**Revendications**

1. Système de régulation de trains d'information pour commutateur paquet, le commutateur comprenant n modules d'entrée chacun étant relié à un lien d'entrée constituant un canal de transport comprenant plusieurs voies sur lesquelles circulent des trains d'information constitués de paquets et formant un entrelacement ; m modules de sortie et un module d'aiguillage interposé entre les modules d'entrée et les modules de sortie pour aiguiller les trains d'information circulant sur une voie k d'un module d'entrée i vers le module de sortie j supportant cette voie, selon une règle pré-établie,
   **caractérisée en ce qu'**il comporte :

   a) dans chaque module d'entrée (Ei), une file d'attente (110) par voie qui passe dans le module, et un organe apte à émettre une indication de présence ou d'absence de paquet (P/A) pour chaque voie supportée par ce module en direction des modules de sortie supportant ces voies ;
   b) pour chaque module de sortie, un arbitre (500) apte à émettre vers une pluralité de modules d'entrée dont il supporte les voies, des demandes (DE) d'émission de paquet , dans la direction dudit module de sortie et selon la règle pré-établie ; chaque arbitre (500) détenant des informations de débit des voies qu'il gère et une règle d'arbitrage tenant compte de ces débits et pouvant adapter dynamiquement le débit à l'état de congestion de la voie dans le commutateur aval.

2. Système de régulation selon la revendication 1, **caractérisé en ce que** les arbitres (500) sont placés dans les modules de sortie correspondant.

3. Système de régulation selon l'une quelconque des revendications précédentes, **caractérisé en ce que** le système comporte un bus de communications (BD) pour les échanges de signaux entre module d'entrée et de sortie du système et **en ce que** ce bus interconnecte directement tous les modules d'entrée à tous les modules de sortie.

4. Système de régulation selon l'une quelconque des revendications précédentes, **caractérisé en ce que** chaque module d'entrée (Ei) comporte un ensemble (110) comprenant une file d'attente par voie , un organe d'accès aux files d'attente et de gestion de ces files (100) apte à émettre des indications de présence ou d'absence de paquets et un organe d'extraction des paquets (120) répondant aux demandes d'émission (DE).

5. Système de régulation selon la revendication 3, **caractérisé en ce que** l'organe d'accès et de gestion des files d'attente (100) et l'organe d'extraction des paquets (120) sont réalisés par un processeur paquet (132) associé à une mémoire de contexte des voies qui fait correspondre à chaque paquet son numéro de voie, et par un organe (130) de traitement de demandes d'émission (DE) reçues et de génération de présence ou d'absence de paquets (P/A).

6. Système de régulation selon la revendication 5, **caractérisé en ce que** l'organe (130) de traitement des demandes d'émission (DE) et de génération de présence ou d'absence de paquets (P/A) comporte un dispositif de réception et de traitement (700-702) pour recevoir plusieurs demandes d'émission (DE) par ordre d'arrivée provenant de modules de sortie différents et traite une seule demande (DE) au rythme de sortie (Te) du module d'entrée, parmi celles reçues afin d'émettre sur le port de sortie un paquet appartenant à la voie associée à la demande d'émission traitée.

7. Système de régulation selon la revendication 5, **caractérisé en ce que** l'organe d'accès aux files d'attente (100) et d'extraction des paquets (120) comporte en outre un organe de communication (191) avec le bus de dialogue (BD) pour mémoriser les demandes d'émission (DE) qui lui sont adressées et mettre en attente les indications de présence ou d'absence de paquet (P/A) tant que le bus n'est pas disponible.

8. Système de régulation selon la revendication 5, **caractérisé en ce que** l'organe de communication (131) comporte un processeur (70) de gestion du bus de dialogue (BD), deux piles (702) dont l'une reçoit les demandes d'émission (DE) des différents modules de sortie et l'autre les indications de présence ou d'absence de paquet relatives à chaque voies et un circuit de contrôle (701) pour comparer l'information reçue d'identification du module destinataire à sa propre identification et savoir ainsi si le bus de dialogue est disponible pour ce module d'entrée.

9. Système de régulation selon la revendication 3, **caractérisé en ce qu'**il comporte un arbitre (600) du bus de dialogue (BD) chargé de fournir les signaux de séquencement pour les lectures et écritures sur le bus de dialogue.

**EP 0 776 143 B1**

10. Système de régulation la revendication 1, **caractérisé en ce que** chaque module de sortie (Si) comporte un processeur de paquets (530) associé à une mémoire de contexte des voies (532), l'arbitre (500) permettant de générer les demandes d'émission et de traiter les. indications de présence ou d'absence de paquets reçues selon la règle d'arbitrage pré-établie.

11. Système de régulation selon les revendications 9 et 10, **caractérisé en ce que** chaque module de sortie comporte un organe de communication (532) pour le dialogue avec le bus de dialogue (BD) pour mémoriser les indications de présence ou d'absence de paquet (P/A) qui lui sont adressées par les différents modules d'entrée et mettre en attente les demandes d'émission de paquets (DE) à destination de différents modules d'entrée tant que le bus n'est pas disponible.

12. Système de régulation selon les revendications 9 et 10, **caractérisé en ce que** l'organe de communication (532) comporte deux piles (702) dont l'une sert à stocker les indictions de présence ou d'absence de paquets et l'autre les demandes d'émission et un circuit de contrôle (701) recevant une information d'identification du module et comparant cette information à sa propre identification et savoir ainsi si le bus de dialogue est disponible pour ce module de sortie.

13. Commutateur paquet communiquant avec un commutateur amont, les deux comprenant un système de régulation selon l'une quelconque des revendications précédentes, **caractérisé en ce que** dans le cas où le commutateur envoie au commutateur amont une demande de réduction de débit pour un module d'entrée, c'est ce module d'entrée de ce commutateur qui fait cette requête et qui la transmet à l'aiguilleur du commutateur amont qui l'aiguille vers le module de sortie concerné.

**Claims**

1. System for controlling data strings for a packet switch, the switch comprising **n** input modules each being connected to an input link forming a transport channel comprising several paths along which travel data strings made up of packets and forming an interlace; **m** output modules and a routing module interposed between the input modules and the output modules to route the data strings travelling along a path **k** from an input module **i** to an output module **j** supporting this path, in accordance with a pre-established rule,
*characterised by the fact* that it includes:

  a) in each input module (Ei), one queue (110) per path which passes into the module, and means able to transmit an indication of packet presence or absence (P/A) for each path supported by this module to output modules supporting these paths;
  b) for each output module an arbitrator (500) able to transmit to a plurality of input modules whose paths it supports, requests (DE) for packet transmission, towards the said output module and in accordance with the pre-established rule; each arbitrator (500) keeping bit-rate information for the paths which it manages and an arbitration rule taking these bit-rates into account and being able to dynamically adapt the bit-rate to the state of congestion of the path in the downstream switch.

2. Control system as described in claim 1, *characterised by the fact that* the arbitrators (500) are placed in the corresponding output modules.

3. Control system as described in any one of the preceding claims, *characterised by the fact that* the system includes a communications bus (BD) for signal exchanges between system input and output modules, and *by the fact that* this bus directly interconnects all the input modules to all the output modules.

4. Control system as described in any one of the preceding claims, *characterised by the fact that* each input module (Ei) includes an assembly (110) comprising one queue per path, a means for access to the queues and for management of these queues (100) able to transmit indications of packet presence or absence and a packet extraction means (120) responding to the transmission requests (DE).

5. Control system as described in claim 3, *characterised by the fact that* the means for access to and management of the queues (100) and the means for packet extraction (120) are formed by a packet processor (132) associated with a context memory of the paths which causes correspondence with each packet of its path number, and by a means (130) for processing of transmission requests (DE) received and for generation of packet presence or

**14**

absence (P/A).

6. Control system as described in claim 5, ***characterised by*** *the fact that* the means (130) for processing transmission requests (DE) and for generation of packet presence or absence (P/A) includes a reception and processing device (700 - 702) to receive a plurality of transmission requests (DE) by order of arrival from different output modules and processes a single request (DE) at the output rate (Te) of the input module, from those received in order to transmit at the output port a packet belonging to the path associated with the transmission request processed.

7. Control system as described in claim 5, ***characterised by*** *the fact that* the means for access to the queues (100) and for extraction of the packets (120) also includes a means for communication (191) with the dialogue bus (BD) to store transmission requests (DE) addressed to it and to queue indications of packet presence or absence (P/A) while the bus is unavailable.

8. Control system as described in claim 5, ***characterised by*** *the fact* that the means for communication (131) includes a processor (70) for management of the dialogue bus (BD), two stacks (702) one of which receives the transmission requests (DE) from the different output modules and the other the indications of packet presence or absence relating to each path and a checking circuit (701) to compare the destination module identification data received with its own identification and thus know whether the dialogue bus is available for this input module.

9. Control system as described in claim 3, ***characterised by*** *the fact* that it includes an arbitrator (600) of the dialogue bus (BD) to provide sequencing signals for reads and writes over the dialogue bus.

10. Control system as described in claim 1, ***characterised by*** *the fact that* each output module (Si) includes a packet processor (530) associated with a path context memory (532), the arbitrator (500) permitting generation of transmission requests and processing of the indications of presence or absence of packets received in accordance with the pre-established arbitration rule.

11. Control system as described in claims 9 and 10, ***characterised by*** *the fact that* each output module includes a communication means (532) for dialogue with the dialogue bus (BD) to store packet presence or absence (P/A) indications addressed to it by the different input modules and to queue requests for transmission of packets (DE) to different input modules while the bus is unavailable.

12. Control system as described in claims 9 and 10, ***characterised by*** *the fact that* the communication means (532) includes two stacks (702) one of which serves to store indications of packet presence or absence and the other the transmission requests and a checking circuit (701) receiving data for identification of the module and comparing this data with its own identification and thus knowing whether the dialogue bus in available for this output module.

13. Packet switch communicating with an upstream switch, the two including a control system as described in any one of the preceding claims, ***characterised by*** *the fact that* where the switch sends to the upstream switch a request for bit-rate reduction for an input module, it is this input module of this switch which makes this request and which transmits it to the router of the upstream switch which routes it to the output module in question.

**Patentansprüche**

1. System zur Regulierung von Informationsströmen für eine Paketvermittlungsstelle, wobei die Vermittlungsstelle umfasst: n Eingangsmodule, von denen jeder mit einer Eingangsverbindung verbunden ist, gebildet durch einen Übertragungskanal mit mehreren Übertragungswegen, in denen Datenströme zirkulieren, die aus Paketen bestehen und eine Verschachtelung bilden; m Ausgangsmodule und einen Weichen- bzw. Verteilermodul, angeordnet zwischen den Eingangsmodulen und den Ausgangsmodulen, um die in einem Übertragungsweg k eines Eingangsmoduls i zirkulierenden Datenströme zu dem Ausgangsmodul j weiterzuleiten, der diesen Übertragungsweg unterstützt, nach einer vorher festgelegten Regel,
**dadurch gekennzeichnet, dass** es umfasst:

   a) in jedem Eingangsmodul (Ei) eine Warteschlange (110) pro den Modul durchlaufenden Übertragungsweg und ein Organ, das fähig ist, eine Mitteilung bezüglich einer Paket-Präsenz oder -Nichtpräsenz (P/A) für jeden durch diesen Modul unterstützten Übertragungsweg in Richtung der diese Übertragungswege unterstützenden Ausgangsmodule zu senden;

b) für jeden Ausgangsmodul einen Arbiter (500), fähig einer Vielzahl von Eingangsmodulen, deren Übertragungswege er unterstützt, Paketsendeanfragen bzw. - anforderungen (DE) zu senden, in Richtung des genannten Ausgangsmoduls und nach einer vorher festgelegten Regel, wobei jeder Arbiter (500) Datenraten-Informationen über diejenigen Übertragungswege enthält, die er verwaltet, und eine Arbitrage-Regel besitzt, die diese Datenraten berücksichtigt und die Datenrate dynamisch an den Verstopfungszustand des Übertragungswegs in der nachgeschalteten bzw. anschließenden Vermittlungsstelle anpassen kann.

**2.** Regulierungssystem nach Anspruch 1, **dadurch gekennzeichnet, dass** die Arbiter (500) sich in den entsprechenden Ausgangsmodulen befinden.

**3.** Regulierungssystem nach einem der vorangehenden Ansprüche, **dadurch gekennzeichnet, dass** das System für die Signalaustausche zwischen Eingangs- und Ausgangsmodul des Systems einen Kommunikationsbus (BD) umfasst und dass dieser Bus alle Eingangsmodule mit allen Ausgangsmodulen direkt verbindet.

**4.** Regulierungssystem nach einem der vorangehenden Ansprüche, **dadurch gekennzeichnet, dass** jeder Eingangsmodul (Ei) eine Einheit (110) umfasst, die eine Wartedatei pro Übertragungsweg enthält, sowie ein Organ des Zugriffs auf die Wartedateien und der Verwaltung dieser Dateien (100), fähig Mitteilungen bezüglich der Präsenz oder Nichtpräsenz von Paketen zu senden, und ein Organ zur Entnahme der Pakete (120), das auf die Sendeanfragen bzw. -anforderungen (DE) reagiert.

**5.** Regulierungssystem nach Anspruch 3, **dadurch gekennzeichnet, dass** das Zugriffs- und Warteschlangenverwaltungsorgan (100) und das Paketentnahmeorgan (120) durch einen Paketprozessor (132) realisiert werden, der verbunden ist mit einem Kontextspeicher der Übertragungswege, der jedes Paket mit seiner Übertragungswegnummer in Übereinstimmung bringt, und durch ein Organ (130) zur Verarbeitung der empfangenen Sendeanfragen (DE) und zur Erzeugung von Paket-Präsenz- oder -Nichtpräsenzmitteilungen (P/A).

**6.** Regulierungssystem nach Anspruch 5, **dadurch gekennzeichnet, dass** das Organ (130) zur Verarbeitung der Sendeanfragen (DE) und zur Erzeugung von Paket-Präsenz- oder -Nichtpräsenzmitteilungen (P/A) eine Empfangs- und Verarbeitungsvorrichtung (700-702) umfasst, um mehrere von verschiedenen Ausgangsmodulen stammende Sendeanfragen bzw. -anforderungen (DE) in der Ankunftsreihenfolge zu empfangen, und eine einzige Anfrage (DE) unter den empfangenen im Ausgangtakt (Te) des Eingangsmoduls verarbeitet, um auf dem Ausgangsport ein Paket zu senden, das zu dem Übertragungsweg gehört, der der verarbeiteten Anfrage bzw. Anforderung zugeordnet ist.

**7.** Regulierungssystem nach Anspruch 5, **dadurch gekennzeichnet, dass** das Organ zum Zugreifen auf die Wartedateien und zum Entnehmen der Pakete (120) außerdem ein Organ (191) zum Kommunizieren mit dem Dialogbus (BD) umfasst, um die Sendeanfragen (DE) zu memorieren, die an es adressiert sind, und die Paket-Präsenz- oder - Nichtpräsenzmitteilungen (P/A) in den Wartezustand zu versetzen, solange der Bus nicht zur Verfügung steht.

**8.** Regulierungssystem nach Anspruch 5, **dadurch gekennzeichnet, dass** das Kommunikationsorgan (131) umfasst: einen Prozessor (70) zur Verwaltung des Dialogbusses (BD), zwei Speicher (702), von denen der eine die Sendeanfragen (DE) der verschiedenen Ausgangsmodule und der andere die Paket-Präsenz- oder -Nichtpräsenzmitteilungen bezüglich jedes Übertragungswegs erhält, und eine Kontrollschaltung (701), um die empfangene Information zur Identifikation des Empfangsmoduls mit seiner eigenen Identifikation zu vergleichen und so zu wissen, ob der Dialogbus diesem Eingangsmodul zu Verfügung steht.

**9.** Regulierungssystem nach Anspruch 3, **dadurch gekennzeichnet, dass** es einen Arbiter (600) des Dialogbusses (BD) umfasst, der die Aufgabe hat, die Ablaufsteuerungssignale für die Lese- und Schreiboperationen auf dem Dialogbus zu liefern.

**10.** Regulierungssystem nach Anspruch 1, **dadurch gekennzeichnet, dass** jeder Ausgangsmodul (Si) einen Paketprozessor (530) umfasst, verbunden mit einem Kontextspeicher der Übertragungswege (532), wobei der Arbiter 500 ermöglicht, die Sendeanfragen zu erzeugen und die nach der vorher festgelegten Arbitrage-Regel empfangenen Paket-Präsenz- oder -Nichtpräsenzmitteilungen zu verarbeiten.

**11.** Regulierungssystem nach den Ansprüchen 9 und 10, **dadurch gekennzeichnet, dass** jeder Ausgangsmodul ein Kommunikationsorgan (532) für den Dialog mit dem Dialogbus (BD) umfasst, um die Paket-Präsenz- oder -Nichtpräsenzmitteilungen (P/A) zu speichern, die durch die verschiedenen Eingangsmodule an ihn adressiert sind, und die für die verschiedenen Eingangsmodule bestimmten Paketsendeanfragen (DE) in den Wartezustand zu versetzen, solange der Bus nicht zur Verfügung steht.

12. Regulierungssystem nach den Ansprüchen 9 und 10, **dadurch gekennzeichnet, dass** das Kommunikationsorgan (532) umfasst: zwei Speicher (702), von denen der eine die Paket-Präsenz- oder -Nichtpräsenzmitteilungen speichert und der andere die Sendeanfragen, und eine Kontrollschaltung (701), die eine Information zur Identifikation des Moduls erhält und diese Information mit seiner eigenen Identifikation vergleicht, um so zu wissen, ob der Dialogbus diesem Ausgangsmodul zu Verfügung steht.

13. Paketvermittlungsstelle, die mit einer vorgeschalteten bzw. vorhergehenden Vermittlungsstelle kommuniziert, wobei die beiden ein Regulierungssystem nach einem der vorangehenden Ansprüche umfassen, **dadurch gekennzeichnet, dass** - falls die nachgeschaltete Vermittlungsstelle an die vorgeschalteten Vermittlungsstelle die Aufforderung sendet, die Datenrate für einen Eingangsmodul zu reduzieren, es dieser Eingangsmodul dieser Vermittlungsstelle ist, der diese Aufforderung sendet und zum Verteiler der Vermittlungsstelle überträgt, der sie an den betroffenen Ausgangsmodul weiterleitet.

## FIG_1

E1
Lien d'entrée LE1
Module d'entrée

E2
Lien d'entrée LE2
Module d'entrée

En
Lien d'entrée LEn
Module d'entrée

A
Module d'aiguillage

S1
Module de sortie
LS1
Lien de sortie

S2
Module de sortie
LS2
Lien de sortie

Sm
Module de sortie
LSm

## FIG_2

Port d'entrée de débit DE
Module d'entrée ou de sortie
Port de sortie de débit DS

Arrivée de trois
trains d'information:

(les chiffres 1 et 2 marquent l'ordre
des cellules au sein d'un même train)

**FIG_3**

Carte d'entrée · Carte d'aiguillage · Carte de sortie

Demande de réduction de débit sur le lien

COMMUTATEUR AMONT

Lien entre commutateurs

COMMUTATEUR CONSIDERE

**FIG_4**

Ei · Train d'information A · Sj

E1 · Ti,j,k · T1,1,1 · S1
T1,1,2
T2,1,1 · T1,2,1
E2 · T2,2,1 · S2
T2,3,1
E3 · T3,3,1 · S3

A

E1   DSa1   S1

DEa1

E2   DSa2   S2

DEa2   DEs2

E3   DSa3   S3

DEa3   DEs3

FIG_5

A

E1   S1

DEs1

E2   S2

DEs2

E3   S3

DES3

FIG_6

A

E1   Tampon   S1

DES1

E2   S2

DEs2

E3   S3

DEs3

Organe central

FIG_7

20

## FIG_8

## FIG_9

débit=DSe si Crédit>0
débit=0 si Credit=0

Crédit

Emission d'une
cellule de
cette voie

— — — — : Voie observée avec son tampon associé
et son registre de crédit

# FIG_10

--- →: Cheminement de la voie 1,1,1
←- --: Dialogue entre cartes,concernant la voie1,1,1

EP 0 776 143 B1

# FIG_11

Demande de réduction de débit sur le lien

Lien entre commutateurs

COMMUTATEUR AMONT

COMMUTATEUR CONSIDERE

⟶ Cheminement d'une voie entre commutateurs

# FIG_12

Demande de réduction de débit sur le lien

COMMUTATEUR AMONT

Carte d'entrée

COMMUTATEUR CONSIDERE

--⟶ Cheminement d'une voie entre commutateurs

## FIG_13

- Files d'attente de paquets — 110
- Organe de traitement des demandes d'émission et génération des présence/absence paquet — 130
- Organe de communication pour le bus de dialogue — 131
- Processeur de paquets — 132
- Contextes des voies — 133
- 100 et 120
- E1
- BD
- B

## FIG_14

- ARBITRE: organe de génération des demandes d'émission traitement des presence/absence paquet — 500
- 510
- Organe de communication pour le bus de dialogue — 531
- Processeur de paquets — 530
- Contextes des voies — 532
- S1
- 520
- BD
- B

## FIG_15

Aiguilleur

B

Bus de liaison (ATM)
avec l'aiguilleur

A

E1

0 | e <3.0>

E2

1 | e <3.0>

Sn

15 | e <3.0>

BA

600 | Arbitre bus

BUSN<3.0>

DOE

BD

## FIG_16

DOE

BUSN<3.0>

I

I+1

To=2,7µs/16#170ns

Interface interne    à la carte

131ou531

702

FIFO
de
dialogue

Circuit
de
contrôle

## FIG_17

701

700 | SPANCEIVER

numéro de
carte

B

BD

bus série
(de dialogue entre cartes)

BA

arbitrage du bus

## FIG_18

## FIG_19

## FIG_20

CARTE D'ENTREE

Demande d'émission DE
(via bus de dialogue)

110  13B  13A  130

Une file d'attente
par voie

100

port
d'entrée

Acces aux files
d'attente

Gestion des
files d'attente

fifo des  fifo des
DE Dmg  DE Dc

Extraction paquet
selon demandes
d'émission

port de
sortie

E1

P/A (via bus de dialogue)

indications présence/
absence paquet

## FIG_21

Dialogue
avec
l'ATMIZER
vers

Mémoire de
contextes

530

500

Traitement
de la
réallocation

Arbitre

Horloges

Traitement
des horloges

file DMG

Gestion du dialogue

Vers 531